# EUROPÄISCHE PATENTSCHRIFT

(11) **EP 1 599 706 B1**
(45) Veröffentlichungstag und Bekanntmachung des Hinweises auf die Patenterteilung: **10.10.2007**
(21) Anmeldenummer: 04714295.5
(22) Anmeldetag: 25.02.2004
(51) Int. Cl.: G01G 11/08

(54) **VORRICHTUNG ZUR KONTINUIERLICHEN, GRAVIMETRISCHEN DOSIERUNG**
DEVICE FOR EFFECTING CONTINUOUS GRAVIMETRIC DOSING
DISPOSITIF DE DOSAGE GRAVIMETRIQUE CONTINU

(30) Priorität: 25.02.2003 DE 20303126 U
(43) Veröffentlichungstag der Anmeldung: 30.11.2005
(73) Patentinhaber: Pfister GmbH, 86165 Augsburg (DE)
(72) Erfinder: WOLFSCHAFFNER, Hubert, 86453 Dasing (DE)
(74) Vertreter: Fiener, Josef
(86) Internationale Anmeldenummer: PCT/EP2004/001832
(87) Internationale Veröffentlichungsnummer: WO 2004/076988

(56) Entgegenhaltungen:
- WO-A-99/13302
- DE-A- 3 721 186
- DE-A- 3 926 038
- US-A- 5 119 893
- HAEFNER H W: "EINSATZ DER DOSIERROTORWAAGE ALS GRAVIMETRISCHES STELLGLIED BEI PROZESSFEUERUNGSANLAGEN" WAGEN UND DOSIEREN, VERLAGSGESELLSCHAFT KEPPLER, MAINZ, DE, Bd. 24, Nr. 3, 1. Mai 1993 (1993-05-01), Seiten 3-9, XP000361338 ISSN: 0342-5916

## Beschreibung

Die Erfindung betrifft eine Vorrichtung zur kontinuierlichen, gravimetrischen Dosierung und Massenstrombestimmung von fließfähigen Gütern mit einer Dosiervorrichtung, insbesondere einem Dosierrotor mit Feststellung des momentanen Massenstroms.

Eine derartige Anlage zum kontinuierlichen, gravimetrischen Fördern und/oder Dosieren von Schüttgütern ist aus WO 99/13302, DE 3926038 A1 oder DE 3721186 A1 bekannt, wobei bevorzugt eine Dosierrotorwaage Verwendung findet. Die einer Schüttgutzuführung folgende Dosiervorrichtung ist in einem geschlossenem pneumatischen Förderweg angeordnet und auf Kraftmesszellen abgestützt. Zur entsprechenden Regelung der gewünschten Fördermenge pro Zeiteinheit (Förderstärke) wird hierbei ein rechnergesteuertes, zentrales Dosiersteuersystem verwendet, wobei das Wägesignal von Wägezellen als Eingangssignal dient und die Drehzahl des Dosierrotors und gegebenenfalls der Zellenradschleuse für die Schüttgutzufuhr geregelt wird.

Bei diesem Regelungssystem wird somit in der Dosierrotorwaage die momentan in der Rotorwägestrecke wirkende Schüttgutmasse erfasst, aus der sich durch Multiplikation mit der Winkelgeschwindigkeit des Dosierrotors der Schüttgut-Massendurchsatz ergibt. Die Wägeelektronik verzögert hierbei die Weitergabe des jeweiligen Gewichtswertes der sich momentan auf der Rotorwägestrecke (Messstrecke) befindlichen Schüttgutmasse (Beladung) bis zu einem bestimmten Vorsteuerpunkt, so dass kurz vor dem Austrag des Schüttgutes in die pneumatische Förderleitung entsprechend der vorbestimmten Soll-Förderstärke die Winkelgeschwindigkeit bzw. Drehzahl variiert werden kann, also der Dosierrotor beschleunigt oder verzögert wird. Hierdurch ergibt sich eine relativ hohe Dosiergenauigkeit, die sich für die Dosierung von staubförmigen Schüttgütern, beispielsweise bei der Kohlenstaubdosierung bei Zementdrehrohröfen oder zur Dosierung von Additiven bei der Rauchgasreinigung allgemein bewährt hat.

Zur Steuerung von derartigen gravimetrischen, kontinuierlichen Dosiervorrichtungen, wie Dosierbandwaagen, Dosierrotorwaagen oder gravimetrischen Chargensystemen wird bislang ein separater Dosierrechner verwendet. Hierin erfolgt die Auswertung der Gewichts- und Drehzahlmessung oder ähnlicher Parameter. Zur Steuerung der Drehzahl des Antriebes wird meist ein gesonderter Frequenzumrichter verwendet. Der Frequenzumrichter steuert die Drehzahl des Dosierantriebes, wobei die Vorgabe der Solldrehzahl durch den Dosierrechner erfolgt. Die Übermittlung der Solldrehzahl an den Frequenzumrichter erfolgt mittels serieller oder paralleler Datenleitungen auf analoge oder binäre Weise. Dieser Aufbau entspricht dem eines verteilten Steuerungssystems zur Kommunikation, wodurch der Installations- und Inbetriebnahmeaufwand aufgrund der Verkabelungen, Schnittstellen etc. entsprechend hoch ist.

Demzufolge liegt der Erfindung die Aufgabe zugrunde, eine Vorrichtung zur kontinuierlichen, gravimetrischen Dosierung und Massenstrombestimmung, insbesondere von Schüttgütern zu schaffen, mit der der Installations- und Inbetriebnahmeaufwand wesentlich verringert werden kann.

Diese Aufgabe wird gelöst durch eine Vorrichtung gemäss den Merkmalen des Anspruches 1.

Im Gegensatz zu dem üblichen Dosierelektronikaufbau wird nun die Funktion des Dosierrechners bzw. der Dosiersteuerung in die Motorsteuerung (Frequenzumrichter oder Thyristorsteuergerät) verlagert. Die Auswertung der prozessrelevanten Messwerte, Berechnung der Solldrehzahlen des Dosierantriebes und Steuerung des Dosierantriebes erfolgt somit in vorteilhafter Weise in einer einzigen Baugruppe. Hierdurch wird der Aufwand für die Verkabelung wesentlich verringert, ebenso für Schnittstellen oder Abdichtungen an den einzelnen Gehäusen, zumal derartige Dosiervorrichtungen meist in sehr staubbelasteten Umgebungen eingesetzt werden.

Es sind dabei folgende Konfigurationen für die Baugruppe aus Dosiersteuerung und Motorsteuerung in einem Gerät möglich. Beispielsweise kann dieser Aufbau in einem gemeinsamen Schaltschrank erfolgen, wobei die Messwerterfassung mit einem separaten Messverstärker mit der kombinierten Motor-Dosier-Steuerung kommuniziert. Bevorzugt erfolgt der Aufbau oder Anbau der Baugruppe aus Dosiersteuerung und Motorsteuerung direkt am Dosiergerät, wobei die Messwerterfassung dort auch mit einem separaten Messverstärker mit der kombinierten Motor-Dosier-Steuerung kommunizieren kann. Bevorzugt ist die Baugruppe der kombinierten Motor-Dosier-Steuerung direkt im Antriebsmotor integriert, wobei die Messwerterfassung dort mit einem separaten Messverstärker mit der Motor-Dosier-Steuerung kommuniziert. Dabei kann die Messwerterfassung auch in die Motor-Dosier-Steuerung integriert sein. Der Anbau erfolgt dabei wiederum bevorzugt direkt an der Dosiervorrichtung.

Weitere bevorzugte Ausführungsformen sind Gegenstand der abhängigen Ansprüchen, wobei insbesondere die Möglichkeit zum vereinfachten Aufbau von besonderem Vorteil ist.

Nachfolgend wird ein Ausführungsbeispiel anhand der Zeichnungen näher erläutert und beschrieben. Hierbei zeigen:
- Fig. 1: eine Schemadarstellung einer Vorrichtung zur kontinuierlichen, gravimetrischen Schüttgutdosierung mit einem Dosierrotor als Dosiervorrichtung;
- Fig. 2: eine schematische Darstellung einer Dosierbandwaage als Dosiervorrichtung;
- Fig. 3: eine abgewandelte Ausführung der Dosierbandwaage gemäss Fig. 2 ; und
- Fig. 4: eine weitere Ausführungsform der Dosiervorrichtung.

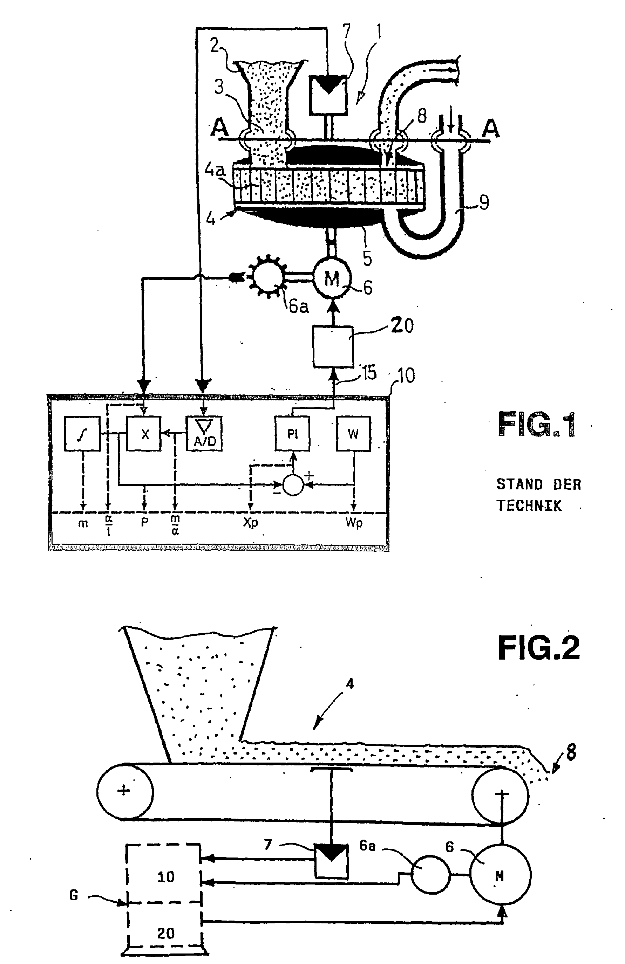

In Fig. 1 ist eine Vorrichtung 1 zur kontinuierlichen gravimetrischen Dosierung und Massenstrombestimmung dargestellt, wobei das entsprechend einer einstellbaren Soll-Förderstärke zu dosierende Fördergut, insbesondere ein rieselfähiges Schüttgut, aus einem Bunker oder Silo 2 mittels einer Zuführung 3 zugeführt wird. Das Fördergut gelangt dabei auf eine Dosiervorrichtung 4, die innerhalb eines Gehäuses 5 angeordnet ist und damit eine Wägestrecke von etwa 300° Umlaufwinkel bis zu einer Abgabestelle 8 definiert. Die Dosiervorrichtung 4 ist hier bevorzugt als Dosierrotor 4a ausgebildet.

Dieser Dosierrotor 4a ist dabei an einer seitlich von dem Gehäuse 5 geführten Schwenkachse A-A gelagert und durch einen drehzahlgeregelten Elektromotor als Antrieb 6, der als Asynchron-, Synchron-, Vektor- oder Reluktanz-Motor ausgebildet ist, angetrieben. Das Gehäuse 5 des Dosierrotors 4a ist begrenzt schwenkbeweglich auf eine Kraftmesszelle 7 abgestützt. Das Abstützmoment auf die von der Schwenkachse A-A beabstandet angeordnete Kraftmesszelle 7 ist direkt proportional zum Massestrom, der über die Wägestrecke des Dosierrotors 4a von der Zuführung 3 bis zur Abgabestelle 8 transportiert wird.

Am unteren Ende des Gehäuses 5 mündet zur Abgabestelle 8 hin eine Ausblasleitung 9. Die Kraftmesszelle 7 und ein Tachogenerator 6a des Antriebs 6 sind mit einer elektronischen Dosiersteuerung 10 verbunden, die somit den momentanen Massenstrom X durch Multiplikation aus momentaner Beladung und Drehzahl/Winkelgeschwindigkeit feststellen und in Beziehung zur eingestellten Soll-Förderstärke W setzt, sowie über einen PI-Regler, eine Steuerleitung 15 und eine Motorsteuerung 20, insbesondere einen Frequenzumrichter den Antriebsmotor 6 des Dosierrotors 4a ansteuert, um die Drehzahl bzw. Winkelgeschwindigkeit zu variieren. Diese Steuerung bzw. Regelung dient im allgemeinen dazu, die eingestellte Förderstärke konstant zu halten. Liegt an der Dosiervorrichtung 4 eine Minusabweichung vor (z. B. -0,2 %), so wird zur Konstanterhaltung der Förderstärke X die Winkelgeschwindigkeit des Dosierrotors 4a um den entsprechenden Wert angehoben, also hier um +0.2 %, wie dies durch den in Fig. 1 angedeuteten Regelpfad an sich bekannt ist. Eine ähnliche Dosiersteuerung 10 ist auch in den nachfolgenden, neuerungsgemäßen Ausführungen entsprechend Fig. 2 bis 4 vorgesehen, wobei jedoch diese Dosiersteuerung 10 neuerungsgemäß direkt mit der Motorsteuerung 20 zu einer Baugruppe G verbunden ist.

Von wesentlicher Bedeutung ist hierbei, dass durch die Verbindung oder Koppelung der Dosiersteuerung 10 mit der Motorsteuerung 20 (meist ein Frequenzumrichter) der Verkabelungs- und Abdichtaufwand wesentlich verringert werden kann, so dass insgesamt der Bauaufwand der Dosiervorrichtung 4, hier in den Fig. 2 bis 4 für eine schematisch dargestellte Dosierwaage erheblich reduziert werden kann. Zudem lässt sich hierdurch auch der Datenaustausch an der Dosiervorrichtung 4, insbesondere der Signalfluss mit den Parametern wie Umdrehungsgeschwindigkeit, Drehzahl, Wägesignale von der Kraftmesszelle 7 usw. beschleunigen. Somit kann durch die zu einer Baueinheit gekoppelte Dosiersteuerung 10 mit Motorsteuerung 20 praktisch unter Wegfall der in Fig. 1 dargestellten Signalleitung 15 die Drehzahlregelung nahezu ohne Totzeit ermöglicht werden. Hierzu sind (wie bekannt) auch in den neuerungsgemäßen Ausführungen zur weitgehenden Minimierung von Regelabweichungen die in Fig. 1 angedeuteten Vergleicherbausteine oder Integrationsschaltungen vorgesehen. Wenn beispielsweise der zum Vorsteuerpunkt P (vgl. Fig. 1 und die eingangs genannte WO 99/13302 des Anmelders) abgegebene Stellwert an den Antriebsmotor 6 aufgrund der Gesamtträgheit für die gewünschte Förderstärke nicht ausreichend war, kann durch Vorverlagerung des Vorsteuerpunktes P relativ zur Abgabestelle 8 die erforderliche Zeitspanne zum Beschleunigen/Abbremsen des Dosiergerätes 4 mit zeitgerechter Erreichung der angesteuerten Geschwindigkeit an der Abgabestelle 8 geschaffen werden und somit der Soll-Massenstrom W mit der Dosiervorrichtung 4 gesteuert bzw. eingeregelt werden. Der Vorsteuerpunkt P sollte dabei so nah wie möglich am Abgabepunkt 8 liegen, so dass beschleunigungs-/bremsstarke Antriebe 6 und schnell ansprechende Frequenzumrichter als Motorsteuerung 20 zweckmäßig sind.

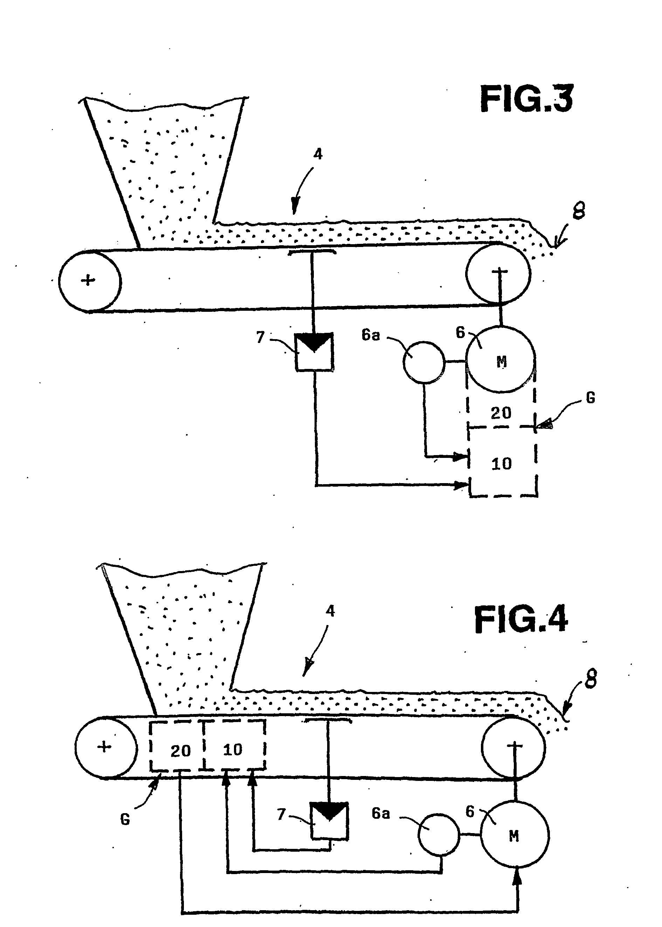

In Fig. 3 ist eine bevorzugte Ausführung der Vorrichtung zur kontinuierlichen gravimetrischen Dosierung und Massenstrombestimmung dargestellt, wobei die Baugruppe G mit kombinierter Dosiersteuerung/Motorsteuerung 10/20 bei ansonsten ähnlichen Aufbau wie in Fig. 1 und Fig. 2 direkt mit dem Antriebsmotor 6 der Dosiervorrichtung 4 verbunden ist. Je nach momentaner Beladung des Dosierbandes kann somit auch der Beginn bzw. Startpunkt der Drehzahlregulierung des Antriebsmotors 6 unter Berücksichtung des jeweiligen Trägheitsmomentes variiert werden, um die Soll-Förderstärke W einzuhalten. In der Dosiersteuerung 10 können dabei auch konstruktiv vorgegebene, geometrische Parameter, wie Eigenmasse und Länge des Dosierbandes gespeichert sein, so dass bei einer vom Tachogenerator 6a oder einem Impulsgeber gemessenen Ist-Winkelgeschwindigkeit genaue Aussagen getroffen werden können, wann die von dem Dosiervorrichtung 4 mit der Kraftmesszelle 7 festgestellte Beladung an der Abgabestelle 8 eintrifft und somit eine entsprechende Nachregulierung durch Beschleunigung/Reduzierung der Fördergeschwindigkeit vorgenommen werden kann.

Obwohl hierbei als Dosiervorrichtung 4 ein Dosierrotor und eine Dosierbandwaage beschrieben wurde, kann die beschriebene Steuer- und Regelvorrichtung auch bei einem Dosierschneckenförderer oder ähnlichen Dosiergeräten zur Erhöhung der Kurzzeit-Dosiergenauigkeit an der Abgabe- bzw. Abwurfstelle angewendet werden, da auch hier erhebliche Trägheitsmomente vorliegen können. Dabei kann die Baugruppe G auch innerhalb der Dosiervorrichtung 4 ein- oder angebaut sein, wie dies in Fig. 4 am Beispiel des Trumzwischenraums der Dosierbandwaage angedeutet ist. Hierdurch lässt sich eine besonders kompakte Bauweise realisieren.

## Patentansprüche

1. Vorrichtung zur kontinuierlichen, gravimetrischen Dosierung und Massenstrombestimmung von fließfähigen Gütern mit einer Dosiervorrichtung (4), mit Feststellung des momentanen Massenstroms vor einer Abgabestelle mittels einer Dosiersteuerung (10), wobei die Austragssteuerung durch Änderung der Drehzahl eines Antriebs (6) der Dosiervorrichtung (4) mittels einer Motorsteuerung (20) erfolgt,
**dadurch gekennzeichnet, dass**
die Dosiersteuerung (10) und die Motorsteuerung (20) einschließlich Frequenzumrichter oder Thyristor steuergerät zu einer Baugruppe (G) verbunden sind, wobei die Baugruppe (G) in einem Schaltschrank oder innerhalb der Dosiervorrichtung (4) angeordnet ist.

2. Vorrichtung nach Anspruch 1, **dadurch gekennzeichnet, dass**
die Baugruppe (G) mit dem Antrieb (6) der Dosiervorrichtung (4) gekoppelt ist.

3. Vorrichtung nach Anspruch 1 oder 2, **dadurch gekennzeichnet, dass**
der Antrieb (6) der Dosiervorrichtung (4) ein Drehzahlerfassungsgerät, insbesondere einen Tachogenerator (6a) zur Erfassung der Ist-Drehzahl aufweist, wobei das Drehzahlerfassungsgerät mit der Dosiersteuerung (10) verbunden ist oder die Dosiervorrichtung (4) ein gesondertes Drehzahlerfassungsgerät, beispielsweise ein Reibrad oder einen Impulsgeber aufweist.

4. Vorrichtung nach einem der Ansprüche 1 bis 3, **dadurch gekennzeichnet, dass**
die Dosiersteuerung (10) wenigstens eine Integrationsschaltung aufweist, die eine ggf. auftretende Abweichung an oder kurz nach der Abgabestelle (8) erfasst und den Stellwert der Dosiersteuerung (10) entsprechend korrigiert.

5. Vorrichtung nach Anspruch 4, **dadurch gekennzeichnet, dass**
in der Dosiersteuerung (10) ein Vergleicherbaustein zur Lageänderung eines Vorsteuerpunktes (P) vorgesehen ist.

6. Vorrichtung nach einem der Ansprüche 1 bis 5, **dadurch gekennzeichnet, dass** der Antrieb (6) als Asynchron-, Synchron-, Vektor- oder Reluktanz-Motor ausgebildet ist.

## Claims

1. An apparatus for effecting continuous gravimetric dosing and determining the mass flow rate of free-flowing products with a dosing apparatus (4), with determination of the momentary mass flow rate before a delivery point by means of a dosing controller (10), with the delivery control occurring by changing the speed of a drive (6) of the dosing apparatus (4) by means of a motor controller (20),
**characterized in that**
the dosing controller (10) and the motor controller (20) including a frequency converter or thyristor control device are joined into a subassembly (G), wherein the subassembly (G) is arranged in a switch cabinet or within the dosing apparatus (4).

2. An apparatus according to claim 1, **characterized in that** the subassembly (G) is coupled with the drive (6) of the dosing apparatus (4).

3. An apparatus according to claim 1 or 2, **characterized in that** the drive (6) of the dosing apparatus (4) comprises a speed detection device, especially a tachometer generator (6a), for detecting the actual speed, with the speed detection device being coupled with the dosing controller (10), or the dosing apparatus (4) comprising a separate speed detection device such as a friction wheel or a pulse generator.

4. An apparatus according to one of the claims 1 to 3, **characterized in that** the dosing controller (10) comprises at least one integration circuit which respectively detects an optionally occurring deviation at or shortly after the delivery point (8) and respectively corrects the control value of the dosing controller (10).

5. An apparatus according to claim 4, **characterized in that** a comparator component is provided in the dosing controller (10) for changing the position of a precontrol point (P).

6. An apparatus according to one of the claims 1 to 5, **characterized in that** the drive (6) is configured as an asynchronous, synchronous, vector or reluctance motor.

## Revendications

1. Dispositif de dosage gravimétrique continu et de détermination du courant de masse des marchandises aptes à s'écouler avec un dispositif de dosage (4), avec la détermination du courant de masse momentané avant un lieu de livraison à l'aide d'un réglage ou d'une commande du dosage (10), le réglage du rendement s'effectuant en modifiant la vitesse de rotation d'un entraînement (6) du dispositif de dosage (4) à l'aide d'un réglage du moteur (20),
**caractérisé en ce que**
le réglage ou commande du dosage (10) et le réglage ou commande du moteur (20), y compris le changeur de fréquence ou l'appareil de réglage du thyristor sont reliés à un bloc (G), le bloc (G) étant disposé dans une armoire électrique ou à l'intérieur du dispositif de dosage (4).

2. Dispositif selon la revendication 1 **caractérisé en ce que** le bloc (G) est couplé à l'entraînement (6) du dispositif de dosage (4).

3. Dispositif selon la revendication 1 ou 2 **caractérisé en ce que**
l'entraînement (6) du dispositif de dosage (4) présente un appareil d'enregistrement ou d'acquisition de la vitesse de rotation, en particulier un générateur tachymétrique (6a) permettant d'enregistrer ou d'acquérir la vitesse de rotation réelle, l'appareil d'enregistrement ou d'acquisition de la vitesse de rotation étant relié à la commande du dosage (10) ou encore le dispositif de dosage (4) présentant un appareil d'enregistrement ou d'acquisition de la vitesse de rotation distinct, par exemple une roue de friction ou un donneur d'impulsion.

4. Dispositif selon l'une quelconque des revendications 1 à 3, **caractérisé en ce que** la commande du dosage (10) présente au moins un circuit d'intégration qui enregistre ou acquiert le cas échéant un écart apparaissant au niveau du lieu de livraison (8) ou juste après et qui corrige en conséquence la valeur de réglage de la commande du dosage (10).

5. Dispositif selon la revendication 4, **caractérisé en ce qu'**un module de comparaison permettant de changer la position d'un point de préréglage (P) est prévu dans le réglage du dosage (10).

6. Dispositif selon l'une quelconque des revendications 1 à 5, **caractérisé en ce que** l'entraînement (6) est réalisé en tant que moteur asynchrone, synchrone, vectoriel ou de réluctance.
